# EUROPÄISCHE PATENTSCHRIFT

(11) **EP 1 095 549 B1**
(45) Veröffentlichungstag und Bekanntmachung des Hinweises auf die Patenterteilung: **26.05.2004**
(21) Anmeldenummer: 00123188.5
(22) Anmeldetag: 26.10.2000
(51) Int. Cl.: A01B 59/06

(54) **Anbauschnittstelle zur Kopplung von Arbeitsgeräten an ein Arbeitsfahrzeug**
Working tool and vehicle connection interface
Interface d'accouplement d'un outil à un véhicule de travail

(30) Priorität: 28.10.1999 DE 19951840
(43) Veröffentlichungstag der Anmeldung: 02.05.2001
(73) Patentinhaber: DEERE & COMPANY, Moline, Illinois 61265-8098 (US)
(72) Erfinder: Fedotov, Sergiy, 01069 Dresden (DE); Bernhardt, Gerd, Prof. Dr.-Ing. habil, 01728 Hänichen (DE); Wünsche, Mario, 01454 Radeberg (DE); Weiss, Heinz, 64625 Bensheim (DE)
(74) Vertreter: Lau-Loskill, Philipp, Dipl.-Phys.

(56) Entgegenhaltungen:
- DE-A- 19 637 547
- FR-A- 2 698 517
- US-A- 3 432 184
- US-A- 4 125 271

## Beschreibung

Die Erfindung betrifft eine Anbauschnittstelle zur Kopplung von Arbeitsgeräten an ein Arbeitsfahrzeug mit einem Kopplungsrahmen, der Kopplungsmittel für die Befestigung der Arbeitsgeräte aufweist, und mit wenigstens sechs längenverstellbaren Verbindungselementen, deren jeweils erstes Ende gelenkig mit dem Fahrzeug verbindbar ist und deren jeweils zweites Ende gelenkig mit dem Kopplungsrahmen in Verbindung steht.

Es sind unterschiedliche Anbauschnittstellen, auch Gerätekopplungs-Vorrichtungen genannt, bekannt, durch die ein landwirtschaftliches Anbaugerät an einem landwirtschaftlichen Fahrzeug befestigbar ist. Eine derartige Gerätekopplung ist beispielsweise ein Dreipunkt-Geräteanbau, wie er durch ISO 730 oder DIN 9674 definiert ist. Übliche Dreipunkt-Geräteanbauten stellen jedoch keine Lenkfunktion für das Anbaugerät bereit. Es gibt zwar Führungsmechanismen (Acura Trak von Sunco Marketing), die für ein Anbaugerät eine Lenkfunktion bereitstellen, diese Mechanismen bieten jedoch keine Möglichkeit zum seitlichen Verschieben des Anbaugeräts. Ein aus der US-A-5,697,454 bekannter Mechanismus enthält eine Anordnung, welche um einen vertikalen Bolzen verschwenkbar ist und daher ebenfalls keine seitliche Verschiebung ermöglicht. Es gibt des weiteren Reihenführungsmechanismen, wie beispielsweise den "Navigator" der Firma HR Manufacturing Co., die zwar ein seitliches Verschieben ermöglichen, jedoch keine Lenkfunktion des Anbaugeräts bereitstellen.

Die US-A-3,432,184 beschreibt eine Anbauvorrichtung für einen Traktor mit einer dreieckförmigen Platte, an der eine Koppelplatte befestigbar ist, die der Montage von Anbaugeräten dient. Zwischen dem Traktorrahmen und der Platte verlaufen sieben in ihrer Länge verstellbare Aktuatoren, die mit ihrem jeweils ersten Ende an vier Anlenkstellen des Traktorrahmens angelenkt sind. Zwei im wesentlichen horizontale obere Aktuatoren sind zueinander V-förmig ausgerichtet und laufen mit ihren zweiten Enden an einer oberen Anlenkstelle des Rahmens zusammen. Zwei im wesentlichen horizontale untere Aktuatoren sind parallel zueinander ausgerichtet und greifen mit ihren zweiten Enden an jeweils einer unteren Anlenkstelle des Rahmens an. Zwei schräge Hubaktuatoren sind parallel zueinander ausgerichtet. Sie greifen einenends an der traktorseitigen ersten Anlenkstelle eines der oberen Aktuatoren und anderenends an dem rahmenseitigen Ende eines unteren Aktuators an. Ein schräg ausgerichteter unterer Stabilisierungsaktuator greift mit seinem ersten Ende an der ersten Anlenkstelle eines unteren Aktuators und mit seinem zweiten Ende an dem rahmenseitigen Ende des gegenüberliegenden unteren Aktuators an. Diese Anbauvorrichtung soll eine einfache und schnelle Aufnahme von Anbaugeräten ermöglichen, ohne daß eine genaue Ausrichtung des Traktors zu dem Anbaugerät erforderlich ist. Die Aktuatoren werden auch verwendet, um das Anbaugerät während des Betriebs anzuheben und abzusenken. Um die gewünschten Freiheitsgrade zu erzielen sind sieben Aktuatoren erforderlich. Einige der Aktuatoren greifen an anderen Aktuatoren derart an, daß auf letztere Biegekräfte übertragen werden können, was deren Funktionsfähigkeit beeinträchtigen kann.

Aus der DE-A-196 37 547 geht eine Kupplung zur Verwendung insbesondere bei Industrierobotern hervor, die zwei Kupplungshälften umfaßt, welche durch Paare V-förmig zusammenlaufender Pendelstützen verbunden sind, wobei die Pendelstützen und die Kupplungshälften durch Gelenke verbunden sind. Die Pendelstützen sind derart ausgebildet, daß sie beim Überschreiten vorgebbarer äußerer Zug- und Druckkräfte ihre Länge verändern. Eine Rückstellkraft ist dabei bestrebt, die ursprüngliche Pendellänge wieder einzustellen. Die Kupplung ist während ihrer bestimmungsgemäßen Verwendung in den Kraftfluß eines Manipulationsarms integriert und dient der Aufnahme eines Werkzeugs. Hierfür ist eine Kupplungshälfte am Manipulationsarm fixiert, während die andere Kupplungshälfte der Aufnahme des Werkzeugs dient. Die Kupplung ist für die automatische Aufnahme und lagerichtige Verriegelung des Werkzeugs ausgebildet und soll dies auch dann ermöglichen, wenn das aufzunehmende Werkzeug fehlausgerichtet ist. Beim Auftreffen der Kupplung auf das fehlausgerichtete Werkzeug wird die genannte Rückstellkraft überschritten, so daß durch eine Längenänderung der jeweiligen Pendelstützen eine entsprechende Ausweichbewegung der Kupplung erfolgt, wobei die werkzeugseitige Kupplungshälfte auf das Werkzeug ausgerichtet wird. Die Rückstellkraft ist hinreichend groß, um eine automatische, lagerichtige Verriegelung des Werkzeuges an der Kupplung zu gewährleisten. Eine Verwendung dieser bekannte Kupplung in Verbindung mit einer Anbauvorrichtung zur Kopplung landwirtschaftlicher Arbeitsgeräte an Arbeitsfahrzeugen ist im allgemeinen nicht geeignet, da konventionelle Anbauvorrichtungen keine dem Manipulationsarm entsprechende Vorrichtung enthalten, durch welche die Kupplung an ein Arbeitsgerät angenähert werden kann, um dann mit Hilfe der Kupplung eine automatische Verbindung herzustellen. Überdies ist es mit der Kupplung nicht möglich, die Lage eines Arbeitsgeräts relativ zum Arbeitsfahrzeug einzustellen.

Die FR-A-2 698 517 beschreibt eine Kuppelvorrichtung der eingangs genannten Art, welche zwischen einen Traktor und eine Arbeitsmaschine eingefügt werden kann. Die Kuppelvorrichtung enthält einen am Traktor befestigbaren Rahmen und einen an der Arbeitsmaschine befestigbaren Rahmen. Zwischen den beiden Rahmen erstrecken sich sieben doppelwirkende Hydraulikzylinder, welche mittels Kardangelenken an den Rahmen angelenkt sind. Vier Hydraulikzylinder greifen in den Eckpunkten der rechteckigen Rahmen an und sind parallel zueinander ausgerichtet. Zwei Hydraulikzylinder greifen in einem mittleren oberen Bereich des einen Rahmens an und erstrecken sich zu einem mittleren unteren Bereich des anderen Rahmens. Ein Hydraulikzylinder verläuft schräg und im wesentlichen von einem unteren Eckpunkt eines Rahmens zu dem diametral gegenüberliegenden unteren Eckpunkt des anderen Rahmens. Diese Anordnung solle eine translatorische Bewegung der Arbeitsmaschine in drei Richtung und eine Rotationsbewegung um eine horizontale Querachse sowie eine Rotationsbewegung um eine vertikale Achse ermöglichen.

Die der Erfindung zugrunde liegende Aufgabe wird darin gesehen, eine Anbauschnittstelle oder eine Gerätekopplungs-Vorrichtung der eingangs genannten Art bereitzustellen, die auch eine seitliche Lenkfunktion und ein seitliches Verschieben des Arbeitsgeräts ermöglicht, wodurch sich insbesondere seitliche Kräfte, die das Arbeitsgerät beim Betrieb auf das Fahrzeug überträgt, reduzieren lassen. Die Anbauschnittstelle soll alle Bewegungsarten (sechs Freiheitsgrade) zulassen und die Funktionen bekannter Anbauschnittstellen erweitern. Des weiteren soll ein leichtes Ankuppeln von Geräten ermöglicht werden, wobei verschiedene Kopplungsarten für die Befestigung von Arbeitsgeräten am Kopplungsrahmen möglich sind. Die längenverstellbaren Verbindungslemente sollen bei ihrer Betätigung keinen nennenswerten Biegekräften ausgesetzt sein.

Die Aufgabe wird erfindungsgemäß durch die Lehre des Patentanspruchs 1 gelöst. Weitere vorteilhafte Ausgestaltungen und Weiterbildungen der Erfindung gehen insbesondere aus den Unteransprüchen hervor.

Bei der erfindungsgemäßen Anbauschnittstelle sind die sechs Verbindungselemente in geschlossenen kinematischen Ketten derart angeordnet, daß sich der Kopplungsrahmen in sechs Freiheitsgraden bewegen läßt. Es handelt sich hierbei um eine parallel strukturierte Anordnung, deren theoretische Grundlagen in "Kinematik und Robotik" von Manfred Husty, Adolf Karger, Hans Sachs, Waldemar Steinhilper, x.Springer-Verlag Berlin Heidelberg New York (1997), Seiten 491 - 524, ISBN 3-540-63181 erörtert werden. Eine geschlossene kinematische Kette ist ein Getriebe bestehend aus Gliedern (Beinen) und Gelenken, bei dem die Kettenendpunkte an einem gemeinsamen Grundkörper angelenkt sind. Im vorliegenden Fall bilden jeweils zwei Verbindungselemente, die einenends an dem Fahrzeugrumpf (Grundkörper) und anderenends an dem Kopplungsrahmen angelenkt sind eine geschlossene kinematische Kette.

Vorzugsweise sind die Verbindungselemente nach Art eines Hexapoden angeordnet. Unter Hexapoden versteht man eine besondere Anordnung von sechs längenveränderlichen Beinen, wie sie im Zusammenhang mit einem Verfahren zur Steuerung eines motorischen Koordinatenmeßgerätes in der DE-A-197 20 049 und im Zusammenhang mit der Beschreibung von Robotorkinematiken in dem Industriemagazin "Maschinenmarkt", Würzburg 105 (1999) 21, Seite 44 beschrieben wurde. Hexapoden weisen nur geschlossene Ketten mit jeweils zwei Beinen (Verbindungselementen) auf. Es wurde bisher nicht erkannt, daß sich das den Hexapoden zugrundeliegende Prinzip auch zur Ausbildung einer Anbauschnittstelle für Arbeitsfahrzeuge eignet, bei der es weniger auf die Lagepräzision als auf die Beherrschung großer statischer und dynamischer Kräfte ankommt.

Gemäß einer bevorzugten Ausgestaltung der Erfindung werden wenigstens sechs unabhängig voneinander längenverstellbare Verbindungselemente verwendet, deren erste Enden gelenkig mit dem Fahrzeug und deren zweite Enden gelenkig mit dem Kopplungsrahmen verbunden sind. Die ersten Enden der Verbindungselemente sind im wesentlichen in den Eckpunkten eines fahrzeugseitigen Dreiecks angelenkt, wobei jeweils wenigstens zwei Verbindungselemente in der Nähe eines dieser Eckpunkte angelenkt ist. Die zweiten Enden der Verbindungselemente sind im wesentlichen in den Eckpunkten eines rahmenseitigen Dreiecks angelenkt, wobei auch hier jeweils wenigstens zwei Verbindungselemente in der Nähe eines dieser Eckpunkte angelenkt sind.

Im Idealfall laufen jeweils zwei Verbindungselemente genau in jedem der Eckpunkte zusammen, wobei die beiden Verbindungselemente zueinander einen relativ großen Winkel einschließen, durch den die durch die Verbindungselemente übertragenen Kräfte gut beherrschbar sind. Ein gemeinsamer Anlenkpunkt für zwei Verbindungselemente kann jedoch konstruktive Schwierigkeiten bereiten. Aus diesem und anderen Gründen ist es von Vorteil, die Anlenkstellen für die Verbindungselemente lediglich in der Nähe des jeweiligen theoretischen Eckpunkts des Dreiecks anzuordnen, so daß sich die tatsächlichen Anlenkstellen zweier Verbindungselemente nicht exakt, sondern lediglich ungefähr ("im wesentlichen") in den Eckpunkten des Dreiecks befinden.

Es kann auch von besonderem Vorteil sein, wenn die Eckpunkte nicht in einer Ebene (Koppelebene) liegen.

Wird die erfindungsgemäße Anbauschnittstelle in einem Anbauraum verwendet, in dem auch eine Zapfwelle angeordnet ist, so ist es von Vorteil, wenn die traktorseitigen Anlenkpunkte der unteren Aktuatoren so weit auseinander liegen, daß letztere nicht in den Bewegungsraum einer zwischen ihnen durchgeführten Zapfwelle eingreifen.

Die Lagen der geräteseitigen und/oder fahrzeugseitigen Anlenkstellen der Verbindungselemente können relativ zueinander in weiten Grenzen frei gewählt werden. In der Nähe eines Eckpunktes können auch mehrere räumlich getrennte Anlenkelemente für ein Verbindungselement vorgesehen sein, so daß sich das Verbindungselement wahlweise in eines dieser Anlenkelemente einhängen läßt. Durch eine solche Änderung der Führungspunktlagen lassen sich unterschiedliche Konfigurationen auswählen und einstellen.

Bei der erfindungsgemäßen Anordnung werden die Verbindungselemente lediglich auf Druck und Zug und nicht auf Biegung belastet, was ihre Auslegung erleichtert.

Alle Verbindungselemente sind zueinander in einer Dreiecksanordnung positioniert. Benachbarte Verbindungselemente und eine Seite des rahmenseitigen bzw. des fahrzeugseitigen Dreiecks bilden im wesentlichen jeweils ein Dreieck (geschlossene Ketten). Durch diese Anordnung sind u. a. alle Funktionen heutiger 3-Punkt-Anbauvorrichtungen realisierbar.

Die erfindungsgemäße Anbauschnittstelle läßt sich beispielsweise an der Rückseite oder an der Vorderseite eines Arbeitsfahrzeugs, insbesondere eines Ackerschleppers, anordnen. Entsprechend bekannter Parallelmechanismen ermöglicht die parallel strukturierte Anordnung der verstellbaren Verbindungselemente die Bewegungen des Kopplungsrahmens in sechs Freiheitsgraden (3 Rotationen, 3 Translationen). Durch die Ausnützung der sechs Freiheitsgrade der Anbauschnittstelle werden intelligente Funktionen der Anbauschnittstelle realisierbar, die beim bisher üblichen Dreipunktanbau fehlen oder für die zusätzliche mechanische Verstelleinrichtungen oder zusätzliche Hydraulikzylinder (z.B. hydraulischer Oberlenker, hydraulische Hubstrebe, hydraulische Seitenstabilisierung und andere) bereitgestellt werden mußten, ohne daß die Vielseitigkeit der erfindungsgemäßen Lösung erreicht werden konnte.

Die Längen der Verbindungselemente lassen sich weitgehend unabhängig voneinander einstellen. Das Verhältnis der Längen zueinander ist durch eine geeignete Steuerung beliebig einstellbar.

Durch geeignete Einstellung der jeweiligen Längen der Verbindungselemente der erfindungsgemäßen Anbauschnittstelle läßt sich das Arbeitsgerät parallel (zur Seite, in der Höhe und in Fahrzeuglängsrichtung) verschieben, der Anstellwinkel des Arbeitsgeräts einstellen (Verdrehung um eine Achse quer zum Fahrzeug oder um eine vertikale Achse) und das Arbeitsgerät gegenüber dem Arbeitsfahrzeug um eine Fahrzeuglängsachse verdrehen. Die erfindungsgemäße Anbauschnittstelle ermöglicht insbesondere eine seitliche Lenkfunktion des Kopplungsrahmens und eine seitliche Verschiebung der Arbeitsgeräte.

Die erfindungsgemäße Anbauschnittstelle hat damit den besonderen Vorteil, daß sie neben der Bereitstellung der Funktionen einer üblichen Dreipunkt-Anbauschnittstelle (Anheben und Absenken eines Arbeitsgeräts) auch ein leichtes Koppeln von Arbeitsgeräten am Arbeitsfahrzeug ermöglicht, ohne daß das ganze Fahrzeug oder das Arbeitsgerät bewegt werden muß. Es ist auch möglich, durch Längenänderungen der Verbindungselemente zusätzlich zu einer Höhenverstellung und einer Seitenverstellung den Abstand zwischen dem Heck (bzw. der Front) des Arbeitsfahrzeugs und dem Koppelrahmen zu ändern. Das Koppeln ist bei Verwendung verschiedener Kopplungsarten für die Befestigung von Arbeitsgeräten am Kopplungsrahmen möglich. Es wird damit auch ein automatisches An- und Abkoppeln von Arbeits- oder Anbaugeräten bei Stillstand des Fahrzeugs möglich.

Andererseits ist das Arbeitsgerät während seines Betriebs lenkbar und seitlich verschiebbar. Seitliche Kräfte, die das Arbeitsgerät auf den Traktor überträgt, lassen sich durch eine geeignete seitliche Verschiebung des Arbeitsgeräts reduzieren. Durch die Optimierung der Seitenkräfte läßt sich die Manövrierbarkeit und Lenkbarkeit des Gesamtsystems (Arbeitsfahrzeug und Arbeitsgerät) verbessern.

Der Winkel zwischen der Längsachse des Fahrzeugs und der des Arbeitsgeräts (sowie zwischen Arbeitsgerät und Boden) kann beliebig eingestellt werden (dabei werden die Winkel zwischen den Flächen, die durch die fahrzeugseitigen Anlenkpunkte bzw. durch die rahmenseitigen Anlenkpunkte aufgespannt werden, verändert). Insbesondere läßt sich der Anstellwinkel zwischen Gerät und Boden unabhängig von der Aushubhöhe verstellen oder über einen großen Hubbereich beibehalten.

Die erfindungsgemäße Anbauschnittstelle ermöglicht ein Verschwenken des Arbeitsgeräts während der Fahrt. Das Arbeitsgerät läßt sich auch seitlich verschieben, um beispielsweise bei Hangfahrten den Schwerpunkt des Gesamtsystems zum Hang hin zu verschieben. Es kann auch eine Verringerung des Wenderadius und eine Verbesserung der Manövrierbarkeit des Gesamtsystems durch automatisches Schwenken des Arbeitsgeräts bei Kurvenfahrt erreicht werden, so daß beispielsweise beim Durchfahren enger Durchfahrten Kollisionen durch das Ausschwenken des Anbaugeräts vermieden werden.

Durch gezielte Veränderung der Koppellänge zwischen Arbeitsfahrzeug und Koppelebene kann eine Verschiebung des Schwerpunkts des Gesamtsystems (Arbeitsfahrzeug und Arbeitsgerät) nach oben/unten und nach rechts/links vorgenommen werden. Durch eine gezielte seitliche Verschiebung des Schwerpunktes läßt sich die Stabilität des Gesamtsystems bei Transportfahrten, während der Bodenbearbeitung und bei Hangfahrten verbessern.

Für eine gewünschte translatorische Verschiebung oder Verdrehung des Kopplungsrahmens kann durch eine Steuerung eine Koordinatentransformation berechnet werden, aus der Steuersignale zur Einstellung der Längen der Verbindungselemente abgeleitet werden, so daß der Kopplungsrahmen in die gewünschte Stellung verstellt wird. Durch die Steuerung läßt sich die Lage des Kopplungsrahmens und damit des Arbeitsgeräts sehr genau einstellen, so daß sich die Arbeitsqualität gegenüber einem herkömmlichen Dreipunktanbau erheblich steigern läßt.

In einem Arbeitsspeicher der Steuerung können beliebige Längen der Verbindungselemente gespeichert und nach Bedarf von der Steuerelektronik reproduziert werden, so daß sich Standardeinstellungen bzw. Arbeitszyklen, beispielsweise für das Absenken und Ausheben des Arbeitsgeräts, leicht und schnell wiederholen lassen. Durch eine Verbindung der Steuerelektronik mit einer Schlagkartierungs- und/oder einer GPS-Datei läßt sich eine effektive Arbeitstiefenregelung realisieren.

Die Anlenkstellen der ersten und zweiten Enden der Verbindungselemente sind vorzugsweise so ausgebildet, daß sie ein allseitiges Verschwenken der Verbindungselemente bezüglich des Fahrzeugs bzw. des Kopplungsrahmens zulassen.

Eine bevorzugte Ausgestaltung der Erfindung sieht vor, daß der Koppelrahmen im wesentlichen dreieckförmig ausgebildet ist. Im Bereich jeder Ecke des Koppelrahmens greifen jeweils wenigstens zwei längenverstellbare Verbindungselemente mit einem ihrer Enden gelenkig an. Am Koppelrahmen, beispielsweise im Bereich seiner Ecken, können Koppelmittel zur Aufnahme eines Arbeitsoder Anbaugerätes angeordnet sein. Es stehen eine Vielzahl bekannter Koppelmittel zur Auswahl.

An Stelle des dreieckförmigen Koppelrahmens kann auch ein sogenannter Einphasenkuppler verwendet werden. Dieser besteht aus zwei V-förmig angeordneten Schenkeln, die in einem oberen Scheitelpunkt miteinander verbunden sind und keilförmig nach unten auseinanderlaufen. Die Funktionsweise des Einphasenkupplers ist ähnlich der in der US-A-3,432,184 beschriebenen Platte, die eine Kopplungsplatte aufzunehmen vermag. Der obere Scheitelpunkt und die beiden unteren freien Enden des Einphasenkupplers bilden ein Dreieck. Im Bereich der Eckpunkte dieses Dreiecks greifen jeweils ein Ende wenigstens zweier längenverstellbarer Verbindungselemente gelenkig an.

Auf dem Kopplungsrahmen können elektrische und hydraulische mit dem Fahrzeug verbundene Versorgungs- und Meßanschlüsse angeordnet sein.

Es ist von besonderem Vorteil, wenn das rahmenseitige Dreieck und das fahrzeugseitige Dreieck als zueinander ähnliche Dreiecke ausgebildet sind. Es handelt sich bei diesen Dreiecken vorzugsweise um gleichschenklige oder gleichseitige Dreiecke. Die symmetrische Anordnung erleichtert die Ansteuerung der Verbindungselemente, durch die der Kopplungsrahmen in sechs Freiheitsgraden verstellt oder bewegt wird.

Vorzugsweise sind das rahmenseitige Dreieck und das fahrzeugseitige Dreieck in einer Grund- oder Ausgangsstellung im wesentlichen um 180° zueinander verdreht.

Um eine Konvergenz der Geräteschnittstelle zu ermöglichen, ist es von besonderem Vorteil, wenn das fahrzeugseitige Dreieck kleiner ist als das geräteseitige Dreieck. Bei dieser Ausbildung treffen sich die von dem Arbeitsgerät in das Arbeitsfahrzeug eingeleiteten Kräfte in einem horizontalen Führungspol und in einem vertikalen Führungspol.

Gemäß einer bevorzugten Ausgestaltung der Erfindung enthält wenigstens ein Verbindungselement einen Hydraulikzylinder, insbesondere einen doppelseitig wirkenden Hydraulikzylinder, oder ein elektromechanisches Verstellelement. Durch Hydraulikzylinder lassen sich auf einfache Weise große Kräfte, beispielsweise zum Anheben des Arbeitsgeräts aufbringen, während elektromechanische Verstellelemente eine einfach ansteuerbare Verstellmöglichkeit bieten. Der Druck der Hydraulikzylinder kann erfaßt und zur Massenbestimmung des Arbeitsgeräts genutzt werden.

Zur Einstellung der Länge der Verbindungselemente kann eine Steuervorrichtung vorgesehen sein, die aufgrund von Sollwertvorgaben erforderliche Längen der Verbindungselemente berechnet und entsprechende Steuersignale ausgibt. Die Sollwerte werden beispielsweise durch eine Bedienungsperson eingestellt. Sie können jedoch auch durch eine übergeordnete Steuerung, beispielsweise eine Lageregelung, vorgegeben werden. Die Berechnung der Steuersignale erfolgt anhand der konkreten geometrischen Anordnung der Verbindungselemente und ihrer Anlenkpunkte.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht eines Arbeitsfahrzeugs mit einer frontseitigen und einer heckseitigen erfindungsgemäß ausgebildeten Anbauschnittstelle und mit einer Bestellkombination und
- Fig. 2: die perspektivische Prinzipskizze einer heckseitigen erfindungsgemäßen Anbauschnittstelle.

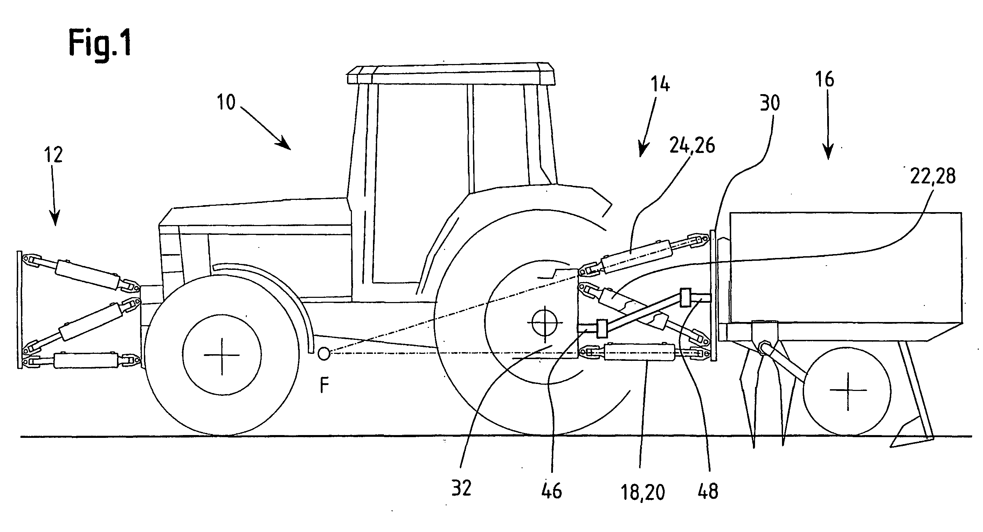

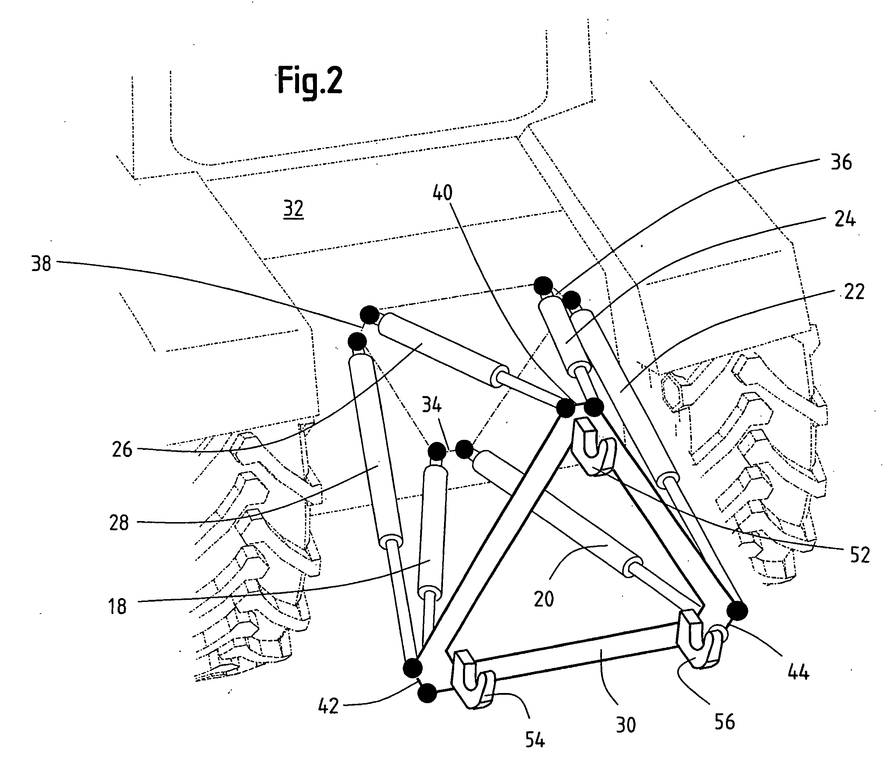

Aus Fig. 1 geht ein Ackerschlepper 10 hervor, an dem eine frontseitige Anbauschnittstelle 12 und eine heckseitige Anbauschnittstelle 14 angelenkt sind. An der heckseitigen Anbauschnittstelle 14 ist eine Bestellkombination 16 montiert, während an der frontseitigen Anbauschnittstelle 12 derzeit kein Arbeitsgerät befestigt ist. Einzelheiten der Anbauschnittstellen gehen aus der Figur 2 hervor. Gleiche oder sich entsprechende Bauteile wurden mit denselben Bezugsziffern belegt.

Die Anbauschnittstelle des dargestellten Ausführungsbeispiels enthält im wesentlichen einen dreieckförmigen Kopplungsrahmen 30 und sechs längenverstellbare Verbindungselemente 18, 20, 22, 24, 26, 28, deren jeweils erste Enden gelenkig am Fahrzeugrumpf 32, z. B. am Differentialgehäuse oder am Fahrzeugrahmen, und deren jeweils zweite Enden gelenkig am Kopplungsrahmen 30 befestigt sind.

Die fahrzeugseitigen Anlenkstellen der Verbindungselemente 18, 20, 22, 24, 26, 28 liegen im wesentlichen in den Eckpunkten 34, 36, 38 eines fahrzeugseitigen Dreiecks. Einer dieser Eckpunkte 34 liegt tief und bezüglich der Fahrzeugquerrichtung in der Mitte. Die beiden weiteren Eckpunkte 36, 38 des fahrzeugseitigen Dreiecks liegen miteinander auf gleicher Höhe oberhalb des tiefen Eckpunkts 34 und sind symmetrisch zur Fahrzeugquerrichtung angeordnet. Die rahmenseitigen Anlenkstellen der Verbindungselemente 18, 20, 22, 24, 26, 28 liegen im wesentlichen in den Eckpunkten 40, 42, 44 eines rahmenseitigen Dreiecks. Einer dieser Eckpunkte 40 liegt hoch, während die beiden weiteren Eckpunkte 42, 44 des rahmenseitigen Dreiecks miteinander auf gleicher Höhe liegen und unterhalb des hohen Eckpunkts 40 angeordnet sind.

Bei dem fahrzeugseitigen und dem rahmenseitigen Dreieck handelt es sich im vorliegenden Ausführungsbeispiel jeweils um gleichseitige Dreiecke. Es sind auch gleichschenklige Dreiecke möglich. Gleichschenklige Dreiecke mit einer vergleichsweise großen Erstreckung in vertikaler Richtung können dann von Vorteil sein, wenn besonders große vertikale Kräfte durch die Anbauschnittstelle aufgenommen werden müssen.

Ein erstes Verbindungselement 18 ist einenends in der Nähe des tief liegenden fahrzeugseitigen Eckpunkts 34 und anderenends in der Nähe eines ersten der beiden tief liegenden rahmenseitigen Eckpunkte 42 angelenkt. Ein zweites Verbindungselement 20 ist einenends in der Nähe des tief liegenden fahrzeugseitigen Eckpunkts 34 und anderenends in der Nähe eines zweiten der beiden tief liegenden rahmenseitigen Eckpunkte 44 angelenkt. Ein drittes Verbindungselement 22 ist einenends in der Nähe eines ersten der beiden hoch liegenden fahrzeugseitigen Eckpunkte 36 und anderenends in der Nähe des zweiten tief liegenden rahmenseitigen Eckpunkte 44 angelenkt. Ein viertes Verbindungselement 24 ist einenends in der Nähe des ersten hoch liegenden fahrzeugseitigen Eckpunkts 36 und anderenends in der Nähe des hoch liegenden rahmenseitigen Eckpunkts 40 angelenkt. Ein fünftes Verbindungselement 26 ist einenends in der Nähe eines zweiten der beiden hoch liegenden fahrzeugseitigen Eckpunkte 38 und anderenends in der Nähe des hoch liegenden rahmenseitigen Eckpunkts 40 angelenkt. Ein sechstes Verbindungselement 28 ist einenends in der Nähe des zweiten hoch liegenden fahrzeugseitigen Eckpunkts 38 und anderenends in der Nähe des ersten tief liegenden rahmenseitigen Eckpunkts 42 angelenkt.

Die Verbindungselemente 18, 20, 22, 24, 26, 28 sind zueinander in einer Dreiecksanordnung derart positioniert, daß benachbarte Verbindungselemente 18, 20, 22, 24, 26, 28 mit einer Seite des fahrzeugseitigen Dreiecks bzw. des rahmenseitigen Dreiecks jeweils ein Dreieck bilden. Das fahrzeugseitige Dreieck (34, 36, 38) und das rahmenseitige Dreieck (40, 42, 44) sind zueinander ähnliche Dreiecke, die in ihrer dargestellten Ausgangsstellung zueinander um 180° verdreht sind.

Um eine Konvergenz der Geräteschnittstelle zu erreichen, ist das fahrzeugseitige Dreieck etwas kleiner als das rahmenseitige Dreieck. Dies hat, wie aus Fig. 1 hervorgeht, z. B. zur Folge, daß bezüglich der vertikalen Ausrichtung die oberen Verbindungselemente 24, 26 nicht parallel zu den unteren Verbindungselemente 18, 20 verlaufen. Die Verbindungselemente 18, 20, 22, 24, 26, 28 konvergieren fahrzeugseitig in einem vertikalen Momentanpol F, d. h. ihre Achsen laufen in dem Momentanpol F zusammen. Die Verbindungselemente 18, 20, 22, 24, 26, 28 konvergieren des weiteren in einem nicht gezeigten horizontalen Momentanpol, der nicht mit dem vertikalen Momentanpol zusammenfallen muß. Bei dem Momentanpol F (auch Momentanzentrum genannt) handelt es sich um einen virtuellen Ort, an dem die virtuelle Einleitung der Arbeitsgerätekräfte in den Ackerschlepper erfolgt. Durch geeignete Längenänderung der Verbindungselemente 18, 20, 22, 24, 26, 28 läßt sich der Momentanpol F in Fahrzeuglängsrichtung, in Fahrzeugquerrichtung und in vertikaler Richtung verschieben. In der Schwimmstellung geht die Resultierende des Arbeitsgeräts durch den Momentanpol F. Durch Einstellung der Lage des Momentanpols F läßt sich die durch eine Zugkraft hervorgerufene Hinterachsbelastung variieren.

Zum Heben und Senken des Arbeitsgeräts 16 dienen im wesentlichen die Verbindungselemente 22 und 28. Die Schwimmstellung der Geräteschnittstelle wird bei freigeschalteten Verbindungselementen 22 und 28 erreicht. Die Kinematik der längenverstellbaren Verbindungselemente 18, 20, 24 und 26 gewährleistet hierbei die vertikale Konvergenz der Geräteschnittstelle.

Die vertikale Ausrichtung des Kopplungsrahmens 30 kann beim Anheben und Absenken des Arbeitsgeräts 16 beibehalten werden, d. h. es ist ein paralleles Ausheben und Absenken möglich. Dies ist insbesondere bei einer Bodenbearbeitung mit Zapfwellenbetrieb von Vorteil, da beim Ausheben und Absenken des Arbeitsgeräts die Ausrichtung der fahrzeugseitigen Zapfwelle 46 und die Ausrichtung der geräteseitigen Zapfwelle 48 beibehalten werden können, so daß sich die Winkelgeschwindigkeit der Zapfwelle nicht infolge der Hubbewegung ändert.

Bei den längenverstellbaren Verbindungselementen 18, 20, 22, 24, 26, 28 handelt es sich beispielsweise um doppelseitig wirkende Hydraulikzylinder oder um elektromechanische Verstellelemente. Die Anlenkstellen der Verbindungselementen 18, 20, 22, 24, 26, 28 sind derart ausgebildet, daß sie ein allseitiges Verschwenken gegenüber dem Fahrzeugrumpf 32 bzw. dem Koppelrahmen 30 ermöglichen. Es kann sich beispielsweise um Kugel- oder Kreuzgelenke handeln.

Fig. 2 zeigt eine Anbauschnittstelle mit einem geschlossenen dreieckförmigen Kopplungsrahmen 30 mit drei Schenkeln. In den Ecken des Kopplungsrahmens 30 sind die sechs Verbindungselemente 18, 20, 22, 24, 26, 28 angelenkt. Der Kopplungsrahmen 30 trägt in seinen Eckpunkten auf der dem Fahrzeug abgewandten Seite je einen nach oben offenen Haken 52, 54, 56 zur Befestigung von Arbeitsgeräten. Auf dem Kopplungsrahmen 30 können weitere, nicht näher dargestellte Kopplungsmittel sowie Versorgungs- und Meßanschlüsse montiert sein.

An Stelle des in Fig. 2 dargestellten geschlossenen Kopplungsrahmens kann auch ein sogenannter, nicht dargestellter Einphasenkuppler verwendet werden, der im wesentlichen zwei Schenkel aufweist und als ein auf dem Kopf stehendes V ausgebildet ist (der untere Schenkel des in Fig. 2 dargestellten Rahmens fehlt). Die Verbindungselemente greifen an der Basis und an den freien Enden des V an. In den Einphasenkuppler läßt sich ein entsprechend ausgebildetes Rahmenteil des Anbaugeräts einhängen und gegebenenfalls arretieren, wodurch die freien Schenkel des V eine ausreichende Stabilität gewinnen. Befestigungshaken, wie in Fig. 2 dargestellt, sind hier entbehrlich.

## Patentansprüche

1. Anbauschnittstelle zur Kopplung von Arbeitsgeräten (16) an ein Arbeitsfahrzeug (10), mit einem Kopplungsrahmen (30), der Kopplungsmittel (52, 54, 56) für die Befestigung der Arbeitsgeräte (16) aufweist, und mit wenigstens sechs längenverstellbaren Verbindungselementen (18, 20, 22, 24, 26, 28), deren jeweils erstes Ende gelenkig mit dem Fahrzeug (10) verbindbar ist und deren jeweils zweites Ende gelenkig an dem Kopplungsrahmen (30) befestigt ist, wobei die sechs Verbindungselemente (18, 20, 22, 24, 26, 28) in geschlossenen kinematischen Ketten angeordnet sind, **dadurch gekennzeichnet, daß** die sechs Verbindungselemente (18, 20, 22, 24, 26, 28) fahrzeugseitig und/oder kopplungsrahmenseitig in den Eckpunkten eines Sechsecks oder im Wesentlichen in den Eckpunkten eines Dreiecks angreifen und daß die Längen der Verbindungselemente (18, 20, 22, 24, 26, 28) durch Steuersignale einstellbar sind, um eine Bewegung des Kopplungsrahmens (30) in sechs Freiheitsgraden zu ermöglichen.

2. Anbauschnittstelle nach Anspruch 1, **dadurch gekennzeichnet, daß** die Verbindungselemente (18, 20, 22, 24, 26, 28) nach Art eines Hexapoden angeordnet sind.

3. Anbauschnittstelle nach Anspruch 1 oder 2, **dadurch gekennzeichnet, daß** die jeweiligen Eckpunkte des Sechsecks bzw. des Dreiecks nicht notwendigerweise in einer Ebene liegen.

4. Anbauschnittstelle nach Anspruch 1 oder 3, **dadurch gekennzeichnet, daß** die traktorseitigen Anlenkpunkte der unteren Aktuatoren (18, 20) so weit auseinander liegen, daß die unteren Aktuatoren (18, 20) nicht in den Bewegungsraum einer zwischen ihnen durchgeführten Zapfwelle eingreifen.

5. Anbauschnittstelle nach Anspruch 1 oder 4, **dadurch gekennzeichnet, daß** die ersten Enden der Verbindungselemente (18, 20, 22, 24, 26, 28) im wesentlichen in den Eckpunkten (34, 36, 38) eines fahrzeugseitigen Dreiecks angelenkt sind und jeweils wenigstens zwei Verbindungselemente (18, 20, 22, 24, 26, 28) in jedem dieser Eckpunkte (34, 36, 38) zusammenlaufen und daß die zweiten Enden der Verbindungselemente (18, 20, 22, 24, 26, 28) im wesentlichen in den Eckpunkten (40, 42, 44) eines rahmenseitigen Dreiecks angelenkt sind und jeweils wenigstens zwei Verbindungselemente (18, 20, 22, 24, 26, 28) in jedem dieser Eckpunkte (40, 42, 44) zusammenlaufen.

6. Anbauschnittstelle nach einem der Ansprüche 1 bis 5, **dadurch gekennzeichnet, daß** der Koppelrahmen (30) im wesentlichen als dreieckförmiger Rahmen ausgebildet ist und daß im Bereich jeder Ecke des Rahmens jeweils ein Ende wenigstens zweier längenverstellbarer Verbindungselemente (18, 20, 22, 24, 26, 28) gelenkig angreift.

7. Anbauschnittstelle nach einem der Ansprüche 1 bis 6, **dadurch gekennzeichnet, daß** der Koppelrahmen im wesentlichen nach Art eines zweischenkligen, V-förmigen Einphasenkupplers ausgebildet ist und daß im Bereich des Scheitels und im Bereich der freien Enden des Einphasenkupplers jeweils ein Ende wenigstens zweier längenverstellbarer Verbindungselemente (18, 20, 22, 24, 26, 28) gelenkig angreift.

8. Anbauschnittstelle nach einem der Ansprüche 1 bis 7, **dadurch gekennzeichnet, daß** die Anlenkstellen der ersten und zweiten Enden der Verbindungselemente (18, 20, 22, 24, 26, 28) ein allseitiges Verschwenken der Verbindungselemente (18, 20, 22, 24, 26, 28) bezüglich des Fahrzeugs (10) bzw. des Kopplungsrahmens (30) zulassen.

9. Anbauschnittstelle nach einem der Ansprüche 5 bis 8, **dadurch gekennzeichnet, daß** das rahmenseitige Dreieck und das fahrzeugseitige Dreieck zueinander ähnliche Dreiecke sind.

10. Anbauschnittstelle nach einem der Ansprüche 5 bis 9, **dadurch gekennzeichnet, daß** das rahmenseitige Dreieck und das fahrzeugseitige Dreieck gleichseitige oder gleichschenklige Dreiecke sind.

11. Anbauschnittstelle nach einem der Ansprüche 5 bis 10, **dadurch gekennzeichnet, daß** das rahmenseitige Dreieck und das fahrzeugseitige Dreieck in einer Grundstellung der Anbauschnittstelle im wesentlichen um 180° zueinander verdreht sind.

12. Anbauschnittstelle nach einem der Ansprüche 1 bis 11, **dadurch gekennzeichnet, daß** die Verbindungselemente (18, 20, 22, 24, 26, 28) konvergent angeordnet sind und insbesondere das fahrzeugseitige Dreieck kleiner ist als das rahmenseitige Dreieck.

13. Anbauschnittstelle nach einem der Ansprüche 1 bis 12, **dadurch gekennzeichnet, daß** wenigstens ein Verbindungselement (18, 20, 22, 24, 26, 28) einen Hydraulikzylinder, insbesondere einen doppelseitig wirkenden Hydraulikzylinder, oder wenigstens ein elektromechanisches Verstellelement enthält.

## Claims

1. Mounting interface for coupling working tools (16) to a utility vehicle (10), having a coupling frame (30), which has coupling means (52, 54, 56) for attachment of the working tools (16), and having at least six longitudinally adjustable connecting elements (18, 20, 22, 24, 26, 28), the first end of which respectively can be connected in an articulated manner to the vehicle (10), and the second end of which respectively is attached in an articulated manner to the coupling frame (30), the six connecting elements (18, 20, 22, 24, 26, 28) being disposed in closed kinematic chains, **characterised in that** the six connecting elements (18, 20, 22, 24, 26, 28) engage, on the vehicle side and/or on the coupling frame side, in the corner points of a hexagon or substantially in the comer points of a triangle, and **in that** the lengths of the connecting elements (18, 20, 22, 24, 26, 28) are adjustable by means of control signals, in order to make possible a movement of the coupling frame (30) in six degrees of freedom.

2. Mounting interface according to claim 1, **characterised in that** the connecting elements (18, 20, 22, 24, 26, 28) are disposed in the manner of a hexapod.

3. Mounting interface according to claim 1 or 2, **characterised in that** the respective corner points of the hexagon or respectively of the triangle do not necessarily lie in one plane.

4. Mounting interface according to claim 1 or 3, **characterised in that** the articulation points, on the tractor side, of the lower actuators (18, 20) are situated so far apart that the lower actuators (18, 20) do not intrude into the movement space of a power take-off shaft which is led through between them.

5. Mounting interface according to claim 1 or 4, **characterised in that** the first ends of the connecting elements (18, 20, 22, 24, 26, 28) are articulated substantially in the comer points (34, 36, 38) of a triangle on the vehicle side, and respectively at least two connecting elements (18, 20, 22, 24, 26, 28) converge in each of these comer points (34, 36, 38), and **in that** the second ends of the connecting elements (18, 20, 22, 24, 26, 28) are articulated substantially in the comer points (40, 42, 44) of a triangle on the frame side and respectively at least two connecting elements (18, 20, 22, 24, 26, 28) converge in each of these comer points (40, 42, 44).

6. Mounting interface according to one of the claims 1 to 5, **characterised in that** the coupling frame (30) is configured substantially as a triangular frame, and **in that**, in the region of each comer of the frame, respectively one end at least of two longitudinally adjustable connecting elements (18, 20, 22, 24, 26, 28) engages in an articulated manner.

7. Mounting interface according to one of the claims 1 to 6, **characterised in that** the coupling frame is configured substantially in the manner of a two-membered V-shaped single-phase coupler, and **in that**, in the region of the apex and in the region of the free ends of the single-phase coupler, respectively one end at least of two longitudinally adjustable connecting elements (18, 20, 22, 24, 26, 28) engage in an articulated manner.

8. Mounting interface according to one of the claims 1 to 7, **characterised in that** the articulation positions of the first and second ends of the connecting elements (18, 20, 22, 24, 26, 28) permit pivoting of the connecting elements (18, 20, 22, 24, 26, 28) on all sides relative to the vehicle (10) or respectively to the coupling frame (30).

9. Mounting interface according to one of the claims 5 to 8, **characterised in that** the triangle on the frame side and the triangle on the vehicle side are triangles which are similar to each other.

10. Mounting interface according to one of the claims 5 to 9, **characterised in that** the triangle on the frame side and the triangle on the vehicle side are triangles with equal sides or equal members.

11. Mounting interface according to one of the claims 5 to 10, **characterised in that** the triangle on the frame side and the triangle on the vehicle side are rotated, in an initial position of the mounting interface, substantially by 180° relative to each other.

12. Mounting interface according to one of the claims 1 to 11, **characterised in that** the connecting elements (18, 20, 22, 24, 26, 28) are disposed convergently and in particular the triangle on the vehicle side is smaller than the triangle on the frame side.

13. Mounting interface according to one of the claims 1 to 12, **characterised in that** at least one connecting element (18, 20, 22, 24, 26, 28) contains a hydraulic cylinder, in particular a double-acting hydraulic cylinder, or at least one electromechanical adjustment element.

## Revendications

1. Interface de montage pour l'accouplement d'outils de travail (16) à un véhicule de travail (10), comportant un cadre d'accouplement (30), qui comporte des moyens d'accouplement (52, 54, 56) pour la fixation des appareils de travail (16), et au moins six éléments de liaison de longueur réglable (18, 20, 22, 24, 26, 28), dont la première extrémité respective peut être reliée d'une manière articulée au véhicule (10) et dont la seconde extrémité respective est fixée de façon articulée au cadre d'accouplement (30), les six éléments de liaison (18, 20, 22, 24, 26, 28) étant disposés dans des chaînes cinématiques fermées, **caractérisée en ce que** les six éléments de liaison (16, 20, 22, 24, 26, 28) attaquent, côté véhicule et/ou côté cadre d'accouplement, les sommets d'un hexagone ou essentiellement les sommets d'un triangle et que les longueurs des éléments de liaison (18, 20, 22, 24, 26, 28) peuvent être réglés par des signaux de commande, de manière à permettre un déplacement du cadre d'accouplement (30) selon six degrés de liberté.

2. Interface de montage selon la revendication 1, **caractérisée en ce que** les éléments de liaison (18, 20, 22, 24, 26, 28) sont disposés à la manière d'un hexapode.

3. Interface de montage selon la revendication 1 ou 2, **caractérisée en ce que** les sommets respectifs de l'hexagone ou du triangle ne sont pas situés nécessairement dans un plan.

4. Interface de montage selon la revendication 1 ou 3, **caractérisée en ce que** les points d'articulation, situés côté tracteur, des actionneurs inférieurs (18, 20) sont écartés entre eux au point que les actionneurs inférieurs (18, 20) ne s'engagent pas dans l'espace de déplacement d'un arbre de prise directe qui s'étend entre eux.

5. Interface de montage selon la revendication 1 ou 4, **caractérisée en ce que** les première extrémités des éléments de liaison (18, 20, 22, 24, 26, 28) sont articulées essentiellement au niveau des sommets (34, 36, 38) d'un triangle situé sur le véhicule et que respectivement au moins deux éléments de liaison (18, 20, 22, 24, 26, 28) convergent en chacun de ces sommets (34, 36, 38) et que les secondes extrémités des éléments de liaison (18, 20, 22, 24, 26, 28) sont articulées essentiellement aux sommets (40, 42, 44) d'un triangle situé sur le cadre, et que respectivement au moins deux éléments de liaison (18, 20, 22, 24, 26, 28) convergent en chacun de ces sommets (40, 42, 44).

6. Interface de montage selon l'une des revendications 1 à 5, **caractérisée en ce que** le cadre d'accouplement (30) est réalisé essentiellement sous la forme d'un cadre de forme triangulaire et que respectivement une extrémité d'au moins deux éléments de liaison de longueur réglable (18, 20, 22, 24, 26, 28) sont accrochés d'une manière articulée dans la zone de chaque coin du cadre.

7. Interface de montage selon l'une des revendications 1 à 6, **caractérisée en ce que** le cadre d'accouplement est agencé essentiellement à la manière d'un dispositif d'accouplement à une phase en forme de V, à deux branches et que respectivement une extrémité d'au moins deux éléments de liaison de longueur réglable (18, 20, 22, 24, 26, 28) est accrochée de façon articulée dans la zone des extrémités libres du dispositif d'accouplement à une phase.

8. Interface de montage selon l'une des revendications 1 à 7, **caractérisée en ce que** les points d'articulation des premières et secondes extrémités des éléments de liaison (18, 20, 22, 24, 26, 28) permettent un basculement des éléments de liaison (18, 20, 22, 24, 26, 28), de tous côtés, par rapport au véhicule (10) ou au cadre d'accouplement (30).

9. Interface de montage selon l'une des revendications 5 à 8, **caractérisée en ce que** le triangle situé côté cadre et le triangle situé côté véhicule sont des triangles similaires.

10. Interface de montage selon l'une des revendications 5 à 9, **caractérisée en ce que** le triangle côté cadre et le triangle côté véhicule sont des triangles équilatéraux ou isocèles.

11. Interface de montage selon l'une des revendications 5 à 10, **caractérisée en ce que** dans une position de base de l'interface de montage, le triangle côté cadre et le triangle côté véhicule sont pivotés essentiellement de 180° l'un par rapport à l'autre.

12. Interface de montage selon l'une des revendications 1 à 11, **caractérisée en ce que** les éléments de liaison (18, 20, 22, 24, 26, 28) sont disposés de manière à être convergents et que notamment le triangle côté véhicule est plus petit que le triangle côté cadre.

13. Interface de montage selon l'une des revendications 1 à 12, **caractérisée en ce qu'**au moins un élément de liaison (18, 20, 22, 24, 26, 28) contient un vérin hydraulique, notamment un vérin hydraulique à double effet, ou au moins un élément de réglage électromécanique.
